# EUROPÄISCHE PATENTSCHRIFT

(11) **EP 2 943 773 B1**
(45) Veröffentlichungstag und Bekanntmachung des Hinweises auf die Patenterteilung: **15.08.2018**
(21) Anmeldenummer: 14701302.3
(22) Anmeldetag: 09.01.2014
(51) Int. Cl.: G01N 21/17, G01N 21/64

(54) **VERFAHREN ZUM RÄUMLICH HOCHAUFGELÖSTEN ABBILDEN EINER EINEN LUMINOPHOR AUFWEISENDEN STRUKTUR EINER PROBE**
METHOD FOR SPATIALLY HIGH-RESOLVED IMAGING OF A STRUCTURE OF A SAMPLE COMPRISING A LUMINOPHORE
PROCÉDÉ DE REPRÉSENTATION SPATIALE HAUTE RÉSOLUTION D'UNE STRUCTURE D'UN ÉCHANTILLON MUNIE D'UN LUMINOPHORE

(30) Priorität: 09.01.2013 DE 102013100174
(43) Veröffentlichungstag der Anmeldung: 18.11.2015
(73) Patentinhaber: Max-Planck-Gesellschaft zur Förderung der Wissenschaften e.V., 80539 München (DE)
(72) Erfinder: HELL, Stefan W., 37085 Göttingen (DE)
(74) Vertreter: REHBERG HÜPPE + PARTNER
(86) Internationale Anmeldenummer: PCT/EP2014/050270
(87) Internationale Veröffentlichungsnummer: WO 2014/108453

(56) Entgegenhaltungen:
- EP-A1- 1 582 858
- ANDRESEN M ET AL: "Structure and mechanism of the reversible photoswitch of a fluorescent protein", PROCEEDINGS OF THE NATIONAL ACADEMY OF SCIENCES, NATIONAL ACADEMY OF SCIENCES, US, Bd. 102, Nr. 37, 13. September 2005 (2005-09-13), Seiten 13070-13074, XP002524863, ISSN: 0027-8424, DOI: 10.1073/PNAS.0502772102 [gefunden am 2005-08-31]
- BUSCHMANN C ET AL: "Light-induced heat production correlated with fluorescence and its quenching mechanisms", PHOTOSYNTHESIS RESEARCH,, Bd. 21, Nr. 2, 1. August 1989 (1989-08-01) , Seiten 129-136, XP009177617,
- EDWARD SHORE AND ALEX SMALL: "Optimal acquisition scheme for subwavelength localization microscopy of bleachable fluorophores", OPTICS LETTERS, OPTICAL SOCIETY OF AMERICA, US, Bd. 36, Nr. 2, 15. Januar 2011 (2011-01-15), Seiten 289-291, XP001559916, ISSN: 0146-9592, DOI: 10.1364/OL.36.000289
- TANJA BRAKEMANN ET AL: "A reversibly photoswitchable GFP-like protein with fluorescence excitation decoupled from switching", NATURE BIOTECHNOLOGY, Bd. 29, Nr. 10, 1. Januar 2011 (2011-01-01), Seiten 942-947, XP055016082, ISSN: 1087-0156, DOI: 10.1038/nbt.1952

## Beschreibung

### TECHNISCHES GEBIET DER ERFINDUNG

Die Erfindung bezieht sich auf ein Verfahren zum räumlich hochaufgelösten Abbilden einer einen Luminophor aufweisenden Struktur einer Probe, wobei die Probe in einem Messbereich mit einer ein lokales Minimum aufweisenden Intensitätsverteilung von Lumineszenzverhinderungslicht beaufschlagt wird, wobei die Probe in dem Messbereich mit Lumineszenzanregungslicht beaufschlagt wird, das den Luminophor aus einem elektronischen Grundzustand heraus in einen lumineszierenden Zustand anregt, wobei aus dem Messbereich emittiertes Lumineszenzlicht registriert wird und wobei das registrierte Lumineszenzlicht der Position des lokalen Minimums in der Probe zugeordnet wird.

Bei einem solchen Verfahren ist die Intensität des aus dem Messbereich emittierten Lumineszenzlichts ein Maß für die Konzentration des Luminophors an der Position des lokalen Minimums in der Probe. Durch Abscannen der Probe mit dem lokalen Minimum unter Wiederholung der oben genannten Schritte für jede Position des lokalen Minimums wird die Verteilung des Luminophors in der Probe erfasst und so die den Luminophor aufweisende Struktur abgebildet.

Mit dem Begriff "Luminophor" wird hier jede Substanz bezeichnet, von der Lumineszenzlicht als Messsignal erhältlich ist, wenn sie sich in einem angeregten lumineszierenden Zustand befindet. Insbesondere fallen hierunter Fluoreszenzfarbstoffe. Der der Emission des Lumineszenzlichts zugrunde liegende Vorgang muss aber keine Fluoreszenz sein. Es kann sich auch um Streuung, beispielsweise Raman-Streuung, handeln, bei der angeregte Übergangszustände, aus denen Streulicht emittiert wird, als die angeregten lumineszierenden Zustände angesehen werden.

Die interessierende Struktur der Probe kann den Luminophor von sich aus aufweisen, d. h. autolumineszent sein. Die interessierende Struktur der Probe kann jedoch auch künstlich mit dem Luminophor markiert sein. Die künstliche Markierung der Struktur mit dem Luminophor kann z. B. durch sogenannte Antikörperfärbung, d. h. durch Ankoppeln des Luminophors über eine Immunreaktion, oder durch eine gentechnische Veränderung vorgenommen werden, die zu einer gemeinsamen Exprimierung des Luminophors mit der interessierenden Struktur führt.

Wenn hier von einem Zustand, beispielsweise einem elektronischen Grundzustand oder einem angeregten lumineszierenden Zustand des Luminophors die Rede ist, so handelt es sich um einen elektronischen Zustand der zur Lumineszenz fähigen kleinsten Einheit des Luminophors, d. h. eines Moleküls, eines Komplexes, einer Fehlstelle, eines Quantum Dot oder dergleichen.

Wenn hier von einem lokalen Minimum einer Intensitätsverteilung von Licht, beispielsweise des Lumineszenzverhinderungslichts, die Rede ist, so ist hiermit insbesondere eine durch Interferenz erzeugte Nullstelle der Intensitätsverteilung gemeint. Eine solche Nullstelle kann viel kleinere Abmessungen aufweisen, als sie durch die Beugungsgrenze beim Fokussieren von Licht möglich sind. Dabei mag es sich um eine echte Nullstelle handeln, in der die Intensität des Lichts tatsächlich auf Null zurückgeht, oder aber um eine solche, in der die Intensität des Lichts mangels idealer optischer Verhältnisse nur im Wesentlichen auf Null zurückgeht. Wenn hier von Abmessungen eines lokalen Minimums die Rede ist, so beziehen sich diese Abmessungen insbesondere auf die Abmessungen des Volumens, in dem das jeweilige Licht den mit ihm angestrengten Effekt, beispielsweise den mit ihm angeregten Übergang, nicht bis zur Sättigung herbeiführt.

### STAND DER TECHNIK

Ein bekanntes Verfahren zum räumlich hochaufgelösten Abbilden einer einen Luminophor aufweisenden Struktur einer Probe, das die Schritte des Oberbegriffs des unabhängigen Patentanspruchs 1 in der oben angegebenen Reihenfolge umfasst, ist als GSD (Ground State Depletion)-Rasterfluoreszenzlichtmikroskopie bekannt. Bei diesem bekannten Verfahren wird der Luminophor mit dem Lumineszenzverhinderungslicht in Form von GSD-Licht über seinen elektronisch angeregten lumineszierenden Zustand, z. B. über einen elektronisch angeregten Singulettzustand, in einen Dunkelzustand, z. B. einen langlebigen Triplettgrundzustand, überführt, aus dem heraus er mit dem Lumineszenzanregungslicht nicht in den lumineszierenden Zustand angeregt wird. Überall außerhalb des lokalen Minimums der Intensitätsverteilung des Lumineszenzverhinderungslichts geschieht dies bis zur Sättigung. D. h., nur in dem lokalen Minimum der Intensitätsverteilung des Lumineszenzverhinderungslichts liegt der Luminophor nach der Beaufschlagung mit dem Lumineszenzverhinderungslicht noch in seinem elektronischen Grundzustand vor, aus dem heraus er mit dem Lumineszenzanregungslicht in den lumineszierenden Zustand angeregt wird. Nach der Anregung mit dem Lumineszenzanregungslicht von dem Luminophor emittiertes Lumineszenzlicht stammt deshalb ausschließlich aus dem lokalen Minimum der Intensitätsverteilung des Lumineszenzverhinderungslichts und kann daher der Position des lokalen Minimums in der Probe zugeordnet werden.

Bei dem unter dem Stichwort GSD (Ground State Depletion) aus S. Bretschneider et al.: Breaking the diffraction barrier in fluorescence microscopy by optical shelving, Phys. Rev. Lett. 98, 218103 (2007) bekannten Verfahren besteht eine erhebliche Gefahr des Bleichens des Luminophors, weil dieser sowohl in seinem langlebigen Dunkelzustand, in den er mit dem Lumineszenzverhinderungslichts überführt wird, als auch in dem elektronisch angeregten lumineszierenden Zustand, den er beim Überführen in seinen Dunkelzustand zwischenzeitlich einnimmt, in erhöhtem Maße zu chemischen Reaktionen beispielsweise mit Sauerstoff neigt und/oder der Gefahr ausgesetzt ist, dass er durch das Lumineszenzverhinderungslicht oder das Lumineszenzanregungslicht weiter elektronisch angeregt wird, so dass es zu einem photochemischen Bleichen des Luminophors kommt.

Ein weiteres Verfahren zum räumlich hochaufgelösten Abbilden einer einen Luminophor aufweisenden Struktur einer Probe, das die Verfahrensschritte des Oberbegriffs des unabhängigen Patentanspruchs 1 in der obigen Reihenfolge aufweist, ist aus der DE 103 25 460 A1 als Variante von RESOLFT (Reversible Saturable Optical Flurorescence Transitions)-Rasterfluoreszenzlichtmikroskopie bekannt, die von sogenannten schaltbaren Luminophoren Gebrauch macht. Diese Luminophore sind mit Hilfe des Lumineszenzverhinderungslichts in Form von Ausschaltlicht aus einem ersten Konformationszustand, d. h. einer ersten Atomkonfiguration, in dem sie als Luminophore wirksam sind, in einen zweiten Konformationszustand schaltbar, in dem sie nicht als Luminophore wirksam sind, d. h. in dem sie zumindest mit Hilfe des Lumineszenzanregungslichts, das in dem ersten Konformationszustand zur Anregung des lumineszierenden Zustands geeignet ist, nicht in einen lumineszierenden Zustand anregbar sind, in dem sie das als Messsignal registrierte Lumineszenzlicht emittieren. Um ein solches Umschalten überall außerhalb des lokalen Minimums der Intensitätsverteilung des Lumineszenzverhinderungslichts bis zur Sättigung zu treiben, sind bei ausreichend langer Lebensdauer des zweiten Konformationszustands nur vergleichsweise geringe Lichtintensitäten erforderlich. Zudem besteht keine signifikante Gefahr, dass der in seinen anderen Konformationszustand überführte Luminophor aus diesem anderen Konformationszustand heraus bleicht, weil er in diesem Konformationszustand auf das Lumineszenzverhinderungslicht und das Lumineszenzanregungslicht nicht anspricht. Allerdings erfolgt auch die Überführung des schaltbaren Luminophors in seinen zweiten Konformationszustand mit dem Lumineszenzverhinderungslichts über einen angeregten elektronischen Zustand, der bei höheren Intensitäten des Lumineszenzverhinderungslichts Ausgangspunkt für photochemisches Bleichen des Luminophors sein kann. Aus diesem und anderen Gründen ist die absolute Anzahl der nutzbaren Schaltvorgänge zwischen den beiden Konformationszuständen bei einer Vielzahl von schaltbaren Luminophoren begrenzt, insbesondere wenn sie bedarfsweise aktiv, d. h. mit Lumineszenzermöglichungslicht, aus ihrem zweiten, nicht lumineszenzfähigen Konformationszustand in ihren ersten, lumineszenzfähigen Konformationszustand geschaltet werden. Zudem bedeuten die bereits angesprochenen langen Lebensdauern der Konformationszustände, selbst wenn man aktiv zwischen ihnen hin und her schaltet, dass die unter dem Stichwort RESOLFT bekannten Verfahren zum räumlich hochaufgelösten Abbilden einer einen schaltbaren Luminophor aufweisenden Struktur einer Probe vergleichsweise langsam sind. Letztlich ist die Anzahl kommerziell verfügbarer schaltbarer Luminophore, die zum Markieren von Strukturen in einer Probe geeignet sind, begrenzt, insbesondere verglichen mit der Vielzahl von grundsätzlich verfügbaren Luminophoren. Die Entwicklung neuer stabiler schaltbarer Luminophore ist zudem aufwändig.

Ein Verfahren der RESOLFT-Rasterfluoreszenzmikroskopie, das von einem schaltbaren Luminophor Gebrauch macht und die Merkmale des Oberbegriffs des unabhängigen Patentanspruchs 1 in der eingangs angeführten Reihenfolge aufweist, ist aus Andresen M et al.: "Structure and mechanism of the reversible photoswitch of a fluorescent protein", Proceedings of the National Academy of Sciences, National Academy of Sciences, US, Bd. 102, Nr. 37, 13. September 2005, S. 13070-13074 bekannt. Der schaltbare Luminophor ist ein GFP-artiges Protein, das mit Licht zwischen einem fluoreszenten An-Zustand und einem nichtfluoreszenten Aus-Zustand hin und her geschaltet werden kann. Bei dem An- und dem Aus-Zustand des Luminophors handelt es sich um eine trans- und eine cis-Konformation desselben Moleküls, zwischen denen Übergänge in beiden Richtungen optisch anregbar sind.

Ein Verfahren zum räumlich hochaufgelösten Abbilden einer einen Luminophor aufweisenden Struktur einer Probe, das die Verfahrensschritte des Oberbegriffs des unabhängigen Patentanspruchs 1 in grundsätzlich anderer Reihenfolge als eingangs angeführt aufweist, ist in der DE 44 16 558 A1 beschrieben und auch als STED (Stimulated Emission Depletion)-Rasterfluoreszenzlichtmikroskopie bekannt. Hier wird die Probe in einem Messbereich zunächst mit Lumineszenzanregungslicht beaufschlagt, das den Luminophor aus einem elektronischen Grundzustand heraus in einen lumineszierenden Zustand anregt. Dann wird die Probe in dem Messbereich mit einer ein lokales Minimum aufweisenden Intensitätsverteilung von Lumineszenzverhinderungslicht in Form von STED-Licht beaufschlagt, das den angeregten lumineszierenden Zustand durch stimulierte Emission wieder in den Grundzustand abregt. Wenn das Lumineszenzverhinderungslicht den angeregten lumineszierenden Zustand überall außerhalb des Minimums durch stimulierte Emission wieder abgeregt hat, kann anschließend aus dem Messbereich emittiertes Lumineszenzlicht nur aus dem lokalen Minimum der Intensitätsverteilung des Lumineszenzverhinderungslichts stammen und damit der Position des lokalen Minimums in der Probe zugeordnet werden.

Bei dem unter dem Stichwort STED bekannten Verfahren wird auch tatsächlich eine sehr hohe Ortsauflösung beim Abbilden einer den Luminophor aufweisenden Struktur einer Probe erreicht. Dabei wird der Luminophor jedoch erheblich photochemisch belastet und neigt daher stark zum Bleichen. Ursache ist, dass das Lumineszenzverhinderungslicht, das zum Einengen des lokalen Minimums in Form einer Nullstelle seiner Intensitätsverteilung mit hoher absoluter Intensität aufgebracht werden muss, den bereits in seinem angeregten lumineszenten Zustand befindlichen Luminophor beaufschlagt. Daher sind neben der gewünschten stimulierten Emission, die den Luminophor in seinen Grundzustand zurückführt, auch andere Vorgänge, insbesondere weitergehende und zum Bleichen führende elektronische Anregungen des Luminophors, nicht unwahrscheinlich. Auch erneute Anregungen des durch stimulierte Emission zunächst abgeregten Luminophors können durch das eigentlich zur Lumineszenzverhinderungslicht vorgesehene Licht auftreten.

Alle bekannten Verfahren zum räumlich hochaufgelösten Abbilden einer einen Luminophor aufweisenden Struktur einer Probe mit den Merkmalen des Oberbegriffs des unabhängigen Patentanspruchs 1 basieren darauf, dass das Lumineszenzverhinderungslicht den Luminophor entweder vor dem Einfall des Lumineszenzanregungslichts aus seinem lumineszenzfähigen Grundzustand heraus über einen angeregten elektronischen Zustand in einen Dunkelzustand überführt oder aus dem angeregten lumineszierenden Zustand heraus zurück in den Grundzustand. In jedem Fall wird also der Luminophor mit Lumineszenzverhinderungslicht hoher Intensität beaufschlagt, das eine Wellenlänge im Absorptionsspektrum des Luminophors aufweist, und ein angeregter elektronischer Zustand, der mit der Gefahr des photochemischen Bleichens des Luminophors verbunden ist, ist an der Verbesserung der Ortsauflösung mit Hilfe des Lumineszenzverhinderungslichts beteiligt. Zudem scheint es eine Korrelation zwischen der Lebensdauer des Dunkelzustands und der benötigten Intensität des Lumineszenzverhinderungslichts zu geben, die umso geringer ausfallen kann, je länger die Lebensdauer des Dunkelzustands ist.

### AUFGABE DER ERFINDUNG

Der Erfindung liegt die Aufgabe zugrunde, ein Verfahren zum räumlich hochaufgelösten Abbilden einer einen Luminophor aufweisenden Struktur einer Probe aufzuzeigen, bei dem der Luminophor einer besonders geringen Gefahr des photochemischen Bleichens unterworfen ist und dass dennoch hohe Geschwindigkeiten beim Abtasten der Probe mit dem Minimum der Intensitätsverteilung des Lumineszenzverhinderungslichts zulässt.

### LÖSUNG

Die Aufgabe der Erfindung wird durch ein Verfahren mit den Merkmalen des unabhängigen Patentanspruchs 1 gelöst. Bevorzugte Ausführungsformen des erfindungsgemäßen Verfahrens sind in den abhängigen Patentansprüchen definiert.

### BESCHREIBUNG DER ERFINDUNG

Bei einem Verfahren zum räumlich hochaufgelösten Abbilden einer einen Luminophor aufweisenden Struktur einer Probe, wobei die Probe in einem Messbereich mit einer eine Nullstelle aufweisenden Intensitätsverteilung von Lumineszenzverhinderungslicht beaufschlagt wird, wobei die Probe in dem Messbereich mit Lumineszenanregungslicht beaufschlagt wird, das den Luminophor aus einem elektronischen Grundzustand heraus in einen lumineszierenden Zustand anregt, wobei aus dem Messbereich emittiertes Lumineszenzlicht registriert wird und wobei das registrierte Lumineszenzlicht der Position der Nullstelle in der Probe zugeordnet wird, wird der elektronische Grundzustand des Luminophors mit dem Lumineszenzverhinderungslicht so gestört, dass der Luminophor in dem gestörten elektronischen Grundzustand einen um mindestens 50 % reduzierten Absorptionsquerschnitt für das Lumineszenzanregungslicht aufweist. Vergleichsmaßstab bei der Beurteilung des Absorptionsquerschnitts für das Lumineszenzanregungslicht ist hier der ungestörte Grundzustand, in dem der Luminophor 100 % seines Absorptionsquerschnitts für das Lumineszenzanregungslicht aufweist.

Bei dem erfindungsgemäßen Verfahren wird mit dem Lumineszenzverhinderungslicht der Luminophor nicht aus dem elektronischen Grundzustand herausgeführt oder aus einem anderen elektronischen Zustand in den elektronischen Grundzustand zurückgeführt. D. h., es erfolgt keine Änderung des elektronischen Zustands des Luminophors. Stattdessen wird der vorhandene elektronische Grundzustand des Luminophors gestört. Diese Störung wird mindestens so weit getrieben, dass der Luminophor in dem gestörten elektronischen Grundzustand mit maximal der halben Wahrscheinlichkeit von dem Lumineszenzanregungslicht in den lumineszierenden Zustand angeregt wird, als in dem ungestörten elektronischen Grundzustand. Typischerweise wird die Störung jedoch noch weiter getrieben, so dass der Absorptionsquerschnitt auf 20 %, 10 %, 5 %, 3 %, 1 % oder noch weniger seines Ausgangswerts bei dem ungestörten elektronischen Grundzustand reduziert wird. Die Störung betrifft typischerweise die sterische Ordnung des Luminophors, insbesondere seine Atomkerne, in seinem Grundzustand. Diese sterische Ordnung beeinflusst die Antennenfunktion des Luminophors für das Lumineszenzanregungslichts, oder anders gesagt die Fähigkeit des Luminophor zur Wechselwirkung mit, spezieller zur Absorption von Licht, insbesondere in Form des Lumineszenzanregungslichts. Aus diesem Grund verändert die Störung dieser Ordnung den Absorptionsquerschnitt für das Lumineszenzanregungslicht.

Der die Anregung des Luminophors mit dem Lumineszenzanregungslicht behindernde Effekt der Störung seines Grundzustands lässt sich auch nach dem Franck-Condon-Prinzip erklären, wobei jedoch zu übersehen ist, dass die diesem Prinzip zugrunde liegenden Annahmen, wie insbesondere die Born-Oppenheimer-Näherung, bei einer die Ordnung sowohl der Atomkerne als auch der Elektronenwolke des Luminophors erfassenden Störung verletzt sein dürften. Nach der Sichtweise des Franck-Condon-Prinzips fehlt es zu dem gestörten Grundzustand an einem passenden Vibrationsunterzustand des lumineszierenden angeregten elektronischen Zustands des Luminophors. Die Franck-Condon-Faktoren für alle Vibrationsunterzustände des lumineszierenden angeregten elektronischen Zustands sind daher nur klein und führen zu nur kleinen Übergangswahrscheinlichkeiten. Dies ist gleichbedeutend mit dem erfindungsgemäß reduzierten Absorptionsquerschnitt für das Lumineszenzanregungslicht.

Der Begriff des gestörten Grundzustands des Luminophors impliziert zudem, dass der gestörte Grundzustand kein thermischer Gleichgewichtszustand des Luminophors mit seiner Umgebung ist. Zwar wird die Störung mit einer Erhöhung der Energie des Luminophors einhergehen; die Störung mag den Luminophor auch in einen höheren Vibrationsunterzustand seines Grundzustands anheben. Die erhöhte Energie des Luminophors in seinem gestörten Grundzustand entspricht jedoch keiner allgemeinen Erhöhung der Temperatur der Probe in der Umgebung des Luminophors. Vielmehr liegt die Energie des gestörten Grundzustands deutlich oberhalb der durch die Temperatur seiner Umgebung definierten thermischen Energie des Luminophors. Entsprechend geht die erfindungsgemäß mit dem Lumineszenzverhinderungslicht hervorgerufene Störung des elektronischen Grundzustands des Luminophors verloren, wenn sich wieder ein thermisches Gleichgewicht des Luminophors mit seiner Umgebung einstellt. Übrig bleibt dann nur eine kleine Erhöhung der Temperatur der Probe in dem Bereich, auf den sich die Energie der Störung verteilt. Dies bedeutet, dass die Zeitskala, die bei der Durchführung des erfindungsgemäßen Verfahrens primär zu berücksichtigen ist, durch die Relaxationszeit gesetzt wird, mit der der Luminophor in sein thermisches Gleichgewicht mit seiner Umgebung zurückkehrt. Diese Relaxationszeit wird hier auch als Stoß- oder Vibrationsrelaxationszeit bezeichnet, weil das thermische Gleichgewicht typischerweise durch Übertragungen von Bewegungsimpulsen und/oder Schwingungen auf benachbarte Moleküle hergestellt wird. Die typische Größenordnung der Stoß- oder Vibrationsrelaxationszeit liegt im höheren Femtosekunden (fs)-Bereich bis Picosekunden (ps)-Bereich, d. h. von wenigen zehn Femtosekunden bis zu einigen Picosekunden. Typischerweise liegt sie im Bereich weniger bis einiger hundert Femtosekunden.

Der Zeitraum, in dem sich eine Erhöhung der Temperatur der Probe durch die mit dem Lumineszenzverhinderungslicht eingebrachte Energie so ausweitet, dass sie auch das von der Intensitätsverteilung des Lumineszenzverhinderungslichts ausgelassene lokale Minimum erfasst, ist um einige Größenordnungen länger und liegt im Nanosekunden (ns)-Bereich bis Mikrosekunden (µs)-Bereich. Dieser Zeitraum setzt daher kein relevantes zusätzliches zeitliches Limit für das erfindungsgemäße Verfahren, zumal bei diesem auch außerhalb des lokalen Minimums der Intensitätsverteilung keine generelle Erhöhung der Temperatur der Probe in dem Messbereich angestrebt sondern diese möglichst klein gehalten wird.

Es versteht sich, dass bei dem erfindungsgemäßen Verfahren das Lumineszenzverhinderungslicht eine Wellenlänge außerhalb eines Lumineszenzanregungsspektrums und bei einer bevorzugten Ausführungsform auch außerhalb des Lumineszenzabregungsspektrums des Luminophors aufweist, damit das Lumineszenzverhinderungslicht selektiv zur Störung des elektronischen Grundzustand des Luminophors eingesetzt werden kann. Dabei ist eine Wellenlänge als außerhalb des Lumineszenzanregungsspektrums bzw. des Lumineszenzabregungsspektrums des Luminophors anzusehen, wenn der zugehörige Absorptionsquerschnitt z. B. maximal 5 % des maximalen Absorptionsquerschnitts für die Lumineszenzanregung bzw. Lumineszenzabregung in dem Lumineszenzanregungsspektrum bzw. dem Lumineszenzabregungsspektrum beträgt.

Die Störung des elektronischen Grundzustands des Luminophors erfolgt durch molekulare Übertragung von Bewegungsimpulsen oder Schwingungen z. B. durch molekulare Stöße. Mit den übertragenen Bewegungsimpulsen oder Schwingungen auf den Luminophor wird dessen sterische Ordnung gestört. Die Störung der sterischen Ordnung bezieht sich dabei primär auf die räumliche Anordnung der Atomkerne des Luminophors, wird aber auch mit einer Störung der die Atomkerne umgebenden Elektronenwolke einhergehen.

Die Bewegungsimpulse oder Schwingungen zur Störung des Grundzustands der Luminophors gehen insbesondere von Stoß- oder Vibrationsrelaxationen mindestens einer mit dem Lumineszenzverhinderungslicht angeregten Modulatoreinheit aus. D. h., das Lumineszenzverhinderungslicht regt die mindestens eine Modulatoreinheit beispielsweise aus ihrem elektronischen Grundzustand in einen elektronisch angeregten Zustand an, der dann durch Stoß- oder Vibrationsrelaxation, d. h. unter Übertragung von Bewegungsimpulsen und/oder Schwingungen auf den Luminophor, wieder in den elektronischen Grundzustand übergeht.

Bei der mindestens einen Modulatoreinheit kann es sich insbesondere um ein separates Molekül oder eine funktionelle Gruppe handeln. So kann die Modulatoreinheit aus der Gruppe von nicht lumineszenten Farbstoffen ausgewählt sein, die Azofarbstoffe, Carrotine, Cyanine, Cumarinderivate und sogenannte Photosensitizer umfassen. Konkret kann es sich um Crystalviolet oder Methylenblau handeln. Der Luminophor kann ein strukturell verwandter lumineszenter Farbstoff sein.

Für eine effiziente Übertragung von Bewegungsimpulsen und/oder Schwingungen auf den Luminophor ist die Modulatoreinheit dem Luminophor möglichst direkt räumlich zuzuordnen. So können beispielsweise die Wassermoleküle, die sich neben dem lumineszenten Zentrum in der Hülle (Barrel) eines grün fluoreszierenden Proteins (GFP) befinden, als Modulatoreinheiten genutzt werden, da sie dem lumineszenten Zentrum räumlich eng benachbart sind.

Weiterhin ist es möglich, die mindestens eine Modulatoreinheit über eine Bindung an den Luminophor zu koppeln. Eine solche Bindung kann kovalent sein oder eine chemische Brücke umfassen. Je nach Art der Bindung ist die Modulatoreinheit flexibler oder starrer an den Luminophor gekoppelt. Entscheidend ist, dass in Folge der Stoß- oder Vibrationsrelaxation der Modulatoreinheit ausreichend kinetische Energie für die gewünschte Störung des elektronischen Grundzustands des Luminophors auf den Luminophor übertragen wird.

Die Modulatoreinheit kann zu dem Luminophor, an den sie angekoppelt ist, angewinkelt sein. D. h. sie weist vorzugsweise ein π-konjugiertes Elektronensystem auf, das zumindest in etwa orthogonal zu dem π-konjugierten Elektronensystem des Luminophors ist. Dann stört die Modulatoreinheit, trotz der für die Bewegungsimpuls- und/oder Schwingungsübertragung nutzbaren Kopplung an den Luminophor, die Lumineszenzeigenschaften des ungestörten Luminophors möglichst wenig.

Konkret kann die Modulatoreinheit durch das Lumineszenzverhinderungslicht zu einer cis-trans-Isomerisierung angeregt werden. Die bei der Isomerisierung erfolgende Umlagerung einer Atomgruppe der Modulatoreinheit wird besonders effektiv als Bewegungsimpuls auf den angekoppelten Luminophor übertragen, wenn der Luminophor an die sich umlagernde Atomgruppe der Modulatoreinheit angebunden ist. Auch an zwei Atomgruppen der Modulatoreinheit, deren Relativanordnung sich bei der Isomerisierung ändert, kann jeweils ein Luminophor angebunden sein. Wenn die durch das Lumineszenzverhinderungslicht angeregte Isomerisierung instabil ist und die Modulatoreinheit spontan in ihren Ausgangszustand vor der Isomerisierung zurückkehrt, wird auch dabei auf jeden angebundenen Luminophor ein Bewegungsimpuls übertragen, der dessen Grundzustand stört.

In dem gestörten elektronischen Grundzustand ist insbesondere eine atomare Ordnung, d. h. die räumliche oder sterische Anordnung von Atomkernen bei dem Luminophor gestört. Dabei kann die Störung auch eine Schwingung der Atome in Richtung eines anderen, nicht lumineszenzfähigen Konformationszustands des Luminophors sein, wobei dieser andere Konformationszustand jedoch entweder nicht erreicht wird oder nicht stabil ist. In jedem Fall wird die bereits angesprochene Fähigkeit des Luminophors zur Wechselwirkung mit dem Lumineszenzanregungslicht durch die Störung gezielt beeinträchtigt. Wie ebenfalls bereits angesprochen wurde, ist eine solche Störung, da sie keinem thermischen Gleichgewicht des Luminophors entspricht, auch dann, wenn sie effizient angeregt wurde, nur von begrenzter Dauer. Entsprechend müssen die Verfahrensschritte des erfindungsgemäßen Verfahrens verglichen mit bekannten Verfahren zum räumlich hochaufgelösten Abbilden einer Probe schnell aufeinanderfolgend durchgeführt werden.

Insbesondere sollte die Probe in dem Messbereich mit einem Puls des Lumineszenzanregungslichts nur dann beaufschlagt werden, wenn der elektronische Grundzustand des Luminophors durch einen Puls des Lumineszenzverhinderungslichts gestört ist. D. h., das Lumineszenzanregungslicht sollte weder vor der Störung des Grundzustands des Luminophors noch nach dem Abklingen dieser Störung auf die Probe aufgebracht werden. Dadurch trifft das Lumineszenzanregungslicht außerhalb des Minimums der Intensitätsverteilung des Lumineszenzverhinderungslichts im Wesentlichen nur auf Luminophor mit gestörtem Grundzustand, so dass außerhalb des Minimums keine relevante Anregung des lumineszierenden Zustands erfolgt. Wenn diese Bedingung eingehalten wird, kann das Lumineszenzlicht, das von der Probe registriert wird, nur aus dem lokalen Minimum der Intensitätsverteilung des Lumineszenzverhinderungslichts stammen, egal, wann es während oder nach dem Beaufschlagen der Probe mit dem Lumineszenzanregungslicht registriert wird.

Damit die gewünschte räumliche Verteilung der Störung des Grundzustands beim Beaufschlagen mit dem Lumineszenzanregungslicht tatsächlich vorliegt, darf der Luminophor aus seinem gestörten Grundzustand noch nicht wieder in ein thermisches Gleichgewicht mit seiner Umgebung zurückgefunden haben. Um dies sicherzustellen, können Zeiten von 1000 fs, 500 fs oder noch kürzer für einen maximalen zeitlichen Abstand des Lumineszenzanregungslichts von dem Lumineszenzverhinderungslicht einzuhalten sein. Wenn es nicht möglich ist oder nur mit großem Aufwand möglich wäre, das Lumineszenzanregungslicht auf einen Zeitraum einzuschränken, in dem der elektronische Grundzustand des Luminophors tatsächlich gestört ist, kann der auflösungssteigernde Effekt des erfindungsgemäßen Verfahrens dadurch optimal genutzt werden, dass ein Zeitraum, in dem das aus dem Messbereich emittiertes Lumineszenzlicht registriert wird, bereits beendet wird, während der elektronische Grundzustand des Luminophors durch einen vorhergehenden Puls des Lumineszenzverhinderungslichts noch gestört ist, auch wenn der Puls des Lumineszenzanregungslichts noch nicht abgeklungen ist. Ein derartiges "Gaten" des erfassten Lumineszenzlichts mit einer zeitlichen Auflösung im Bereich der Stoß- oder Vibrationsrelaxationszeit des gestörten Grundzustands, erlaubt es, nur Lumineszenzlicht von solchem Luminophor zu registrieren, der zu einem Zeitpunkt angeregt wurde, zu dem die Störung des elektronischen Grundzustands des Luminophors mit der gewünschten räumlichen Verteilung um das Minimum der Intensitätsverteilung des Lumineszenzverhinderungslichts gegeben war. Typischerweise endet der begrenzte Zeitraum, in dem das emittierte Lumineszenzlicht bei dem erfindungsgemäßen Verfahren registriert wird, während eine fortgesetzte Anregung des Luminophors mit dem Lumineszenzanregungslicht erfolgt, spätestens wenige ps, oft nur etwa 1 ps nach dem Puls des Lumineszenzverhinderungslichts.

Verglichen mit der typischen Lebensdauer fluoreszierender Zustände mögen wenige ps nur kurz sein und daher nicht ausreichen, um größere Anteile des von angeregtem Luminophor grundsätzlich erhältlichen Lumineszenzlichts zu erfassen. Andere lumineszierende Zustände, zu denen auch aus einem Triplettgrundzustand elektronisch angeregte lumineszierende Triplettzustände oder an der Streuung von Licht beteiligte lumineszente Übergangszustände von beispielsweise Raman-streuenden Substanzen zählen, können jedoch viel kürzere Lebensdauern aufweisen. Bei der Störung des Grundzustands einer lichtstreuenden Substanz mit dem erfindungsgemäßen Lumineszenzverhinderungslichts wird deren Streuspektrum verschoben oder anderweitig verändert.

Die Dauer des Pulses des Lumineszenzverhinderungslichts ist in erster Nährung unerheblich, solange die mit dem Puls übertragene Energie ausreichend ist, die gewünschte Störung des Grundzustands des Luminophors herbeizuführen. Grundsätzlich könnte das Lumineszenzverhinderungslicht daher auch kontinuierlich aufgebracht werden. Hiermit wäre jedoch ein unerwünschter Wärmeeintrag in die Probe verbunden, der eine lokale Störung des elektronischen Grundzustands des Luminophors nur außerhalb des Minimums der Intensitätsverteilung des Lumineszenzverhinderungslichts zunehmend schwierig machen würde. Es ist ein bekanntes Phänomen, dass die Fluoreszenzlichtemission von Fluoreszenzfarbstoffen mit steigender Temperatur sinkt. Eine generelle Erhöhung der Temperatur der Probe würde auch ihren Absorptionsquerschnitt in ihrem ungestörten, d. h. im thermischen Gleichgewicht befindlichen Grundzustand reduzieren. Daher ist es bei der vorliegenden Erfindung bevorzugt, das Lumineszenzverhinderungslicht in kurzen Pulsen aufzubringen, die typischerweise zwischen 10 fs und 1000 fs, oft zwischen 50 fs und 500 fs lang sind und konkret etwa 300 fs lang sein können. Mit derart kurzen Pulsen wird nur eine begrenzte Energie auf die Probe übertragen, die auch beim Abscannen der Probe ohne grundsätzliche Erhöhung der Temperatur der Probe dissipiert werden kann. Die per Puls des Lumineszenzverhinderungslichts in den Messbereich mit durch die Beugungsgrenze bestimmten Abmessungen für eine erfindungsgemäße Störung des Grundzustands des Luminophors einzubringende Energie liegt in einem typischen Bereich von 1 pJ bis 10.000 pJ und oft zwischen 5 pJ und 500 pJ. Bei dieser Energie bleibt die resultierende Erhöhung der Temperatur der Probe in dem Messbereich klein, auch wenn die mit dem Lumineszenzverhinderungslicht eingebrachte Energie nicht wieder aus der Probe abgeführt wird.

Vorzugsweise weist der Puls des Lumineszenzverhinderungslichts eine solche Intensität auf, dass er eine Störung des elektronischen Grundzustands des Luminophors in dem Messbereich außerhalb des lokalen Minimums seiner Intensitätsverteilung sättigt. D. h., die Störung des elektronischen Grundzustands ist in dem Messbereich überall außerhalb des lokalen Minimums zumindest so groß, dass der Absorptionsquerschnitt für das Lumineszenzanregungslicht um mindestens 50 % reduziert ist.

Praktisch kann der Puls des Lumineszenzverhinderungslichts so ausgelegt sein, dass er einen durch Stoß- oder Vibrationsrelaxation relaxierenden angeregten Zustand der mindestens einen Modulatoreinheit sättigt. Durch Vorsehen der Modulatoreinheit in ausreichender Dichte kann dann auch die gewünschte Störung des gewünschten Grundzustands des Luminophors überall außerhalb des Minimums der Intensitätsverteilung des Lumineszenzverhinderungslichts sichergestellt werden.

Das erfindungsgemäße Verfahren erlaubt es mit minimalem Aufwand, verschiedene Strukturen, die verschiedene, d. h. Lumineszenzlicht unterschiedlicher Wellenlängen emittierende Luminophore aufweisen, gleichzeitig abzubilden. Dazu reicht es grundsätzlich aus, dass gleiche Modulatoreinheiten, die sämtlich mit demselben Anregungsverhinderungslicht anregbar sind, an die unterschiedlichen Luminophore angekoppelt sind, und dass das Lumineszenzlicht der unterschiedlichen Wellenlängen getrennt registriert und den einzelnen Luminophoren an der Position des lokalen Minimums der Intensitätsverteilung des Anregungsverhinderungslichts zugeordnet wird. Das lokale Minimum der Intensitätsverteilung des Anregungsverhinderungslichts definiert für alle Luminophore, an die die Modulatoreinheiten gekoppelt sind, das Volumen der Probe, aus dem das Lumineszenzlicht stammen kann. Auch wenn die Anregung der verschiedenen Luminophore in ihren lumineszierenden Zustand mit Lumineszenzanregungslicht verschiedener, auf den jeweiligen Luminophor abgestimmter Wellenlängen erfolgt, ist dies unproblematisch, da dabei keine lokalen Minima verschiedener Intensitätsverteilungen zur Deckung gebracht werden müssen, wie dies bei der gleichzeitigen Abbildung verschiedener Strukturen, die verschiedene Luminophore aufweisen, sonst oft erforderlich ist.

In einer anderen fortgebildeten Ausführungsform des erfindungsgemäßen Verfahrens wird die Probe vor dem Registrieren von aus dem Messbereich emittierten Lumineszenzlicht zusätzlich mit einer ein lokales Minimum aufweisenden Intensitätsverteilung von herkömmlichen Lumineszenzverhinderungslichts beaufschlagt, das in das Absorptionsspektrum des Luminophors fällt und den Luminophor unter Beteiligung eines angeregten elektronisch angeregten Zustands an der Lumineszenz hindert. Das zusätzliche herkömmliche Lumineszenzverhinderungslicht kann den räumlichen Bereich, aus dem das Lumineszenzlicht aus der Probe emittiert werden kann, nach dem bekannten STED-, GSD- oder RESOLFT-Prinzip noch weiter eingrenzen. D. h. bei dem herkömmlichen Lumineszenzverhinderungslicht, kann es sich um STED-, GSD- oder Ausschaltlicht handeln, wobei letzteres einen schaltbaren Luminophor voraussetzt. Dabei tritt jedoch keine oder eine zumindest deutlich geringere als die für STED, GSD bzw. RESOLFT typische Bleichgefahr des Luminophors auf, da die hohen Intensitäten des herkömmlichen Lumineszenzverhinderungslichts nur (oder zumindest überwiegend) auf Luminophor treffen, der sich in seinem gestörten Grundzustand, aber nicht in einem elektronisch angeregten und damit zum photochemischen Bleichen neigenden Zustand befindet. Wirksam ist das herkömmliche Lumineszenzverhinderungslicht bei dieser Ausführungsform des erfindungsgemäßen Verfahrens mit seinen vergleichsweise kleinen Intensitäten nahe dem lokalen Minimum seiner Intensitätsverteilung, die mit keinen größeren Gefahren eines photochemischen Bleichens des Luminophors verbunden sind.

Die zuletzt beschriebene Variante des erfindungsgemäßen Verfahrens kann auch so interpretiert werden, dass durch die Störung des Grundzustands mit dem Lumineszenzverhinderungslicht der Luminophor im Bereich der hohen Intensitäten des STED-, GSD- oder Ausschaltlichts bei einem STED-, GSD- bzw. RESOLFT-Verfahren in einen Schutzzustand überführt wird, in dem er nicht so stark wie sonst Gefahr läuft, durch die hohen Intensitäten des STED-, GSD- bzw. Ausschaltlichts photochemisch gebleicht zu werden. Dieser vorteilhafte Effekt wird grundsätzlich auch dann erreicht, wenn das erfindungsgemäße Lumineszenzverhinderungslicht zwar primär den Grundzustand des Luminophors ohne elektronische Anregung dieses Grundzustands stört, aber teilweise auch als herkömmliches Lumineszenzverhinderungslicht, d. h. als STED-, GSD- oder Ausschaltlicht, wirkt und so auf zwei Weisen mit einer Wellenlänge die Ortsauflösung des erfindungsgemäßen Verfahrens erhöht.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Element die Rede ist, ist dies so zu verstehen, dass genau ein Element, zwei Elemente oder mehr Elemente vorhanden sind. Diese Merkmale können durch andere Merkmale ergänzt werden oder die einzigen Merkmale sein, aus denen das jeweilige Erzeugnis besteht.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein Energiespektrum eines Fluoreszenzfarbstoffs als Beispiel für einen Luminophor in seinem Singulett-Zustand.
- **Fig. 2**: zeigt schematisch einen Luminophor mit zwei angekoppelten Modulatoreinheiten.
- **Fig. 3**: illustriert schematisch einen Luminophor, bei dem mehrere Modulatoreinheiten mit einem lumineszenten Zentrum in einer gemeinsamen Umhüllung angeordnet sind.
- **Fig. 4**: zeigt ein Energiespektrum einer Modulatoreinheit in ihrem Singulett-Zustand,
- **Fig. 5**: illustriert die einzelnen Schritte eines erfindungsgemäßen Verfahrens; und
- **Fig. 6**: ist ein Zeitablaufdiagramm wesentlicher Schritte des in Fig. 5 illustrierten Verfahrens.

### FIGURENBESCHREIBUNG

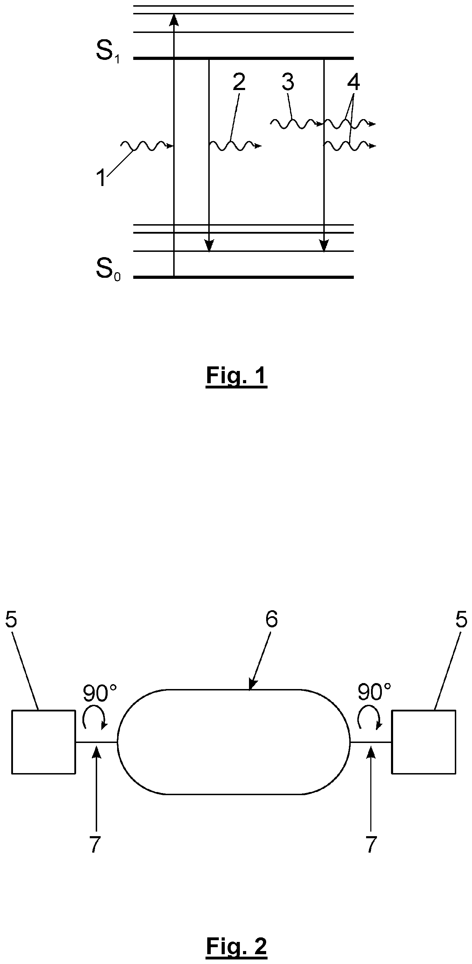

Das in **Fig. 1** illustrierte Energiespektrum eines Fluoreszenzfarbstoffs in seinem Singulett-Zustand umfasst einen elektronischen Grundzustand S₀ mit verschiedenen Vibrationsunterzuständen und einen lumineszenten angeregten elektronischen Zustand S₁. Mit Hilfe von Anregungslicht 1 ist der Fluoreszenzfarbstoff aus seinem Grundzustand S₀ in seinen angeregten Zustand S₁ anregbar. Dieser Zustand S₁ zerfällt spontan in den Grundzustand S₀, wobei Lumineszenzlicht 2, hier konkret Fluoreszenzlicht, emittiert wird. Der angeregte Zustand S₁ kann jedoch noch vor der Emission des Lumineszenzlichts 2 gezielt mit Hilfe von STED-Licht 3 entvölkert werden, das eine andere Wellenlänge als das Anregungslicht 1 und das Lumineszenzlicht 2 aufweist und das den Fluoreszenzfarbstoff aus seinem angeregten Zustand S₁ unter stimulierter Emission von Licht 4 derselben Wellenlänge wie das STED-Licht 3 in seinen Grundzustand S₀ zurückführt. Auch das Anregungslicht 1 kann eine andere Wellenlänge als das Lumineszenzlicht 2 aufweisen, insbesondere eine kürzere, so dass das Lumineszenzlicht 2 über seine Wellenlänge von allem anderen Licht getrennt werden kann.

Der Absorptionsquerschnitt, mit dem das Anregungslicht 1 absorbiert wird, d. h. die Wahrscheinlichkeit, dass das Anregungslicht 1 zur Anregung des Fluoreszenzfarbstoffs aus seinem Grundzustand S₀ in dem angeregten elektronischen Zustand S1 führt, hängt davon ab, ob sich der Fluoreszenzfarbstoff in einem Vibrationsunterzustand des Grundzustands S₀ mit niedriger Energie befindet. So nimmt der Absorptionsquerschnitt mit einer starken Erhöhung der Temperatur des Fluoreszenzfarbstoffs und der Besetzung höherer Vibrationsunterzustände des Grundzustands S₀ ab. Bei dem erfindungsgemäßen Verfahren wird jedoch keine allgemeine Temperaturerhöhung des Fluoreszenzfarbstoffs im thermischen Gleichgewicht herbeigeführt. Vielmehr wird der Fluoreszenzfarbstoff außerhalb eines Minimums einer Intensitätsverteilung von Fluoreszenz- oder Lumineszenzverhinderungslicht so durch einen oder mehrere Bewegungsimpulse und/oder direkte Übertragung von Schwingungen gestört, dass er zwar in seinem elektronischen Grundzustand S₀ verbleibt, dass aber der Absorptionsquerschnitt für das Anregungslicht 1 deutlich reduziert ist. Dies kann man als Erhöhung der Vibrations- oder Schwingungsenergie des einzelnen Fluoreszenzfarbstoffs durch den jeweiligen Stoß und eine entsprechende Reduktion des Absorptionsquerschnitts für das Anregungslicht 1 interpretieren. Diese Energieerhöhung geht deutlich über die thermische Energie des Fluoreszenzfarbstoffs aufgrund der Temperatur seiner Umgebung hinaus. Wenn sich bei dem erfindungsgemäßen Verfahren nach dem Ende der Beaufschlagung mit dem Lumineszenzverhinderungslicht wieder ein thermisches Gleichgewicht des Fluoreszenzfarbstoffs mit seiner Umgebung einstellt, geht die Störung seines Grundzustands, die den Absorptionsquerschnitt für das Anregungslicht 1 reduziert, bereits wieder verloren. Eine verbleibende geringe Temperaturerhöhung des Fluoreszenzfarbstoffs im thermischen Gleichgewicht mit seiner Umgebung mag zwar noch für gewisse Zeit ein lokales Minimum an der Stelle des lokalen Minimums der Intensitätsverteilung des Lumineszenzverhinderungslichts aufweisen, führt aber nicht mehr zu signifikant unterschiedlichen Absorptionsquerschnitten für das Lumineszenzanregungslicht in dem und außerhalb des lokalen Minimums. Zur Erhöhung der Ortsauflösung ist nur der thermische Ungleichgewichtszustand unmittelbar nach der Stoßanregung des Fluoreszenzfarbstoffs nutzbar.

Um diese Stoßanregung bei einem Luminophor hervorzurufen, für den der bislang beschriebene Fluoreszenzfarbstoff ein Beispiel ist, sind Modulatoreinheiten 5 an den Luminophor 6 angekoppelt, die das Lumineszenzverhinderungslicht absorbieren und in Bewegungsimpulse und/oder Schwingungen umwandeln. Dies ist in **Fig. 2** skizziert, wo zwei Modulatoreinheiten 5 über Bindungen 7 so um 90° abgewinkelt an den Luminophor 6 angekoppelt sind, dass ihre π-konjukierten Elektronensysteme im Wesentlichen orthogonal zu demjenigen des Luminophors 6 sind. Die Anzahl der Modulatoreinheiten 5 kann auch kleiner oder größer als zwei sein. Die Art der Bindung kann ebenfalls unterschiedlich sein. Ideal sind Bindungen, die die lumineszenten Eigenschaften des Luminophors 6 nicht beeinträchtigen, aber einen Bewegungsimpulse und/oder Schwingungen, die von den Modulatoreinheiten 5 ausgehen, effektiv auf den Luminophor 6 übertragen. Konkret sind Verbindungen, die mit dem Lumineszenzverhinderungslicht zu einer cis-trans-Isomerisierung anregbar sind, wie beispielsweise Azo-Chromophore, gut als Modulatoreinheit 5 geeignet, um solche Bewegungsimpulse auf jeden angebundenen Luminophor 6 zu übertragen, die dessen Grundzustand erfindungsgemäß stören. Dabei können zwei Luminophore an die beiden Atomgruppen der Modulatoreinheit angebunden sein, die sich bei der Isomerisierung relativ zueinander umlagern.

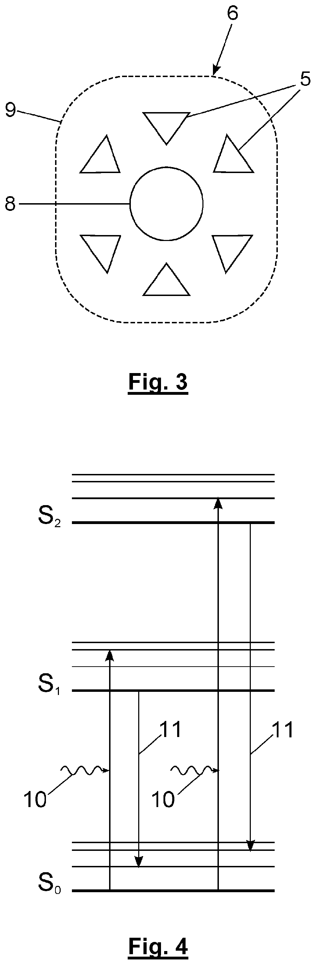

**Fig. 3** zeigt einen Luminophor 6, bei dem ein lumineszentes Zentrum 8 gemeinsam mit Modulatoreinheiten 5 eng von einer Umhüllung 9 umschlossen ist. Eine derartige Konstellation ist beispielsweise beim grün fluoreszierenden Protein gegeben, wo die Modulatoreinheiten 5 Wassermoleküle sind. Diese Wassermoleküle können mit Lumineszenzverhinderungslicht in einen Zustand angeregt werden, der durch Vibrations- oder Stoßrelaxation zerfällt, wobei die von den Modulatoreinheiten 5 ausgehenden Bewegungsimpulse und Schwingungen auf den Luminophor 6 bzw. sein lumineszentes Zentrum 8 übertragen werden und dessen Absorptionsquerschnitt für das Anregungslicht 1 gemäß Fig. 1 reduzieren.

**Fig. 4** skizziert das Energiespektrum im Singulett-Zustand einer Modulatoreinheit 1. Durch das Lumineszenzverhinderungslicht 10 wird die Modulatoreinheit 1 aus dem Grundzustand So in einen angeregten elektronischen Zustand, beispielsweise ihren S₁- oder S₂-Zustand überführt. Insbesondere die zur Anregung des Übergangs in den höheren S₂-Zustand benötigte Energie kann durch eine Wellenlänge des Anregungslichts im UV-Bereich und damit außerhalb des Absorptions- und Emissionsspektrums des Luminophors 6 zur Verfügung gestellt werden. Der angeregte S₁- oder S₂-Zustand zerfällt sehr schnell durch Vibrations- oder Stoßrelaxation 11 zurück in den Grundzustand S₀, wobei bei geeigneter Ankopplung der Modulatoreinheit 5 ein Bewegungsimpuls und/oder Schwingungen auf den Luminophor 6 übertragen werden und dessen Grundzustand in der gewünschten Weise stören.

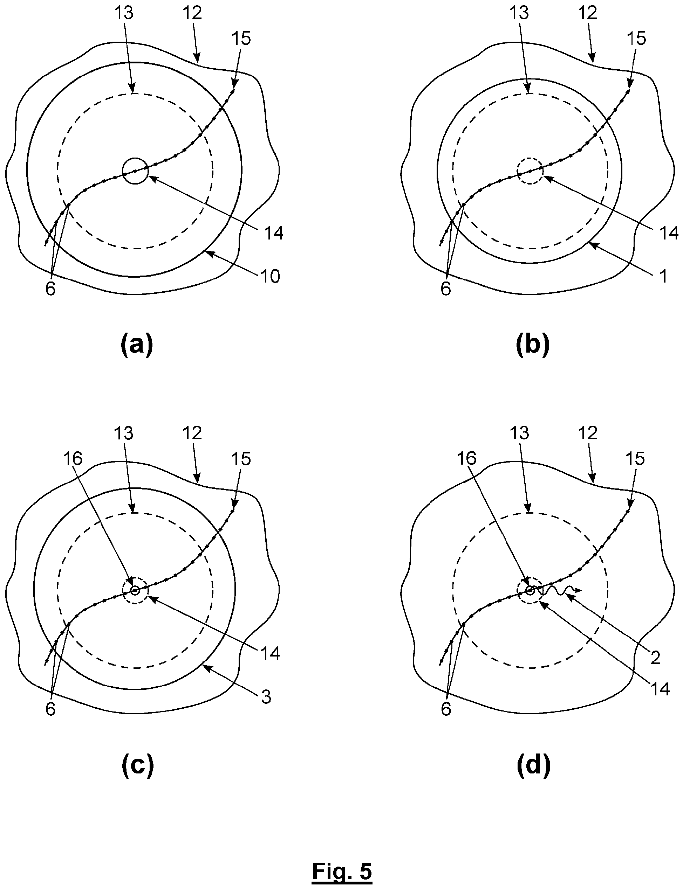

**Fig. 5** skizziert die Schritte eines erfindungsgemäßen Verfahrens. Gemäß **Fig. 5(a)** wird eine Probe 12 in einem Messbereich 13 mit dem Lumineszenzverhinderungslicht 10 beaufschlagt. Dabei weist die Intensitätsverteilung des Lumineszenzverhinderungslichts 10 im Zentrum des Messbereichs 13 ein lokales Minimum 14 in Form einer Nullstelle auf. D. h. überall außerhalb des lokalen Minimums 14 stört das Lumineszenzverhinderungslicht 10 den Grundzustand des Luminophors 6, mit dem eine Struktur 15 in der Probe 12 markiert ist, nicht aber in dem lokalen Minimum 14.

Im nächsten Schritt gemäß **Fig. 5(b)** wird die Probe 12 in dem Messbereich 13 mit Anregungslicht 1 beaufschlagt. Das Anregungslicht 1 kann den Luminophor 6, der beispielsweise ein Fluoreszenzfarbstoff ist, aber nur (oder zumindest vornehmlich nur) in dem lokalen Minimum 14 des Lumineszenzverhinderungslichts 10 gemäß Fig. 1 anregen. So kann in einem Schritt gemäß **Fig. 5(d)** aus dem Messbereich 13 registriertes Lumineszenzlicht 2 dem lokalen Minimum 14 zugeordnet werden, da es nur (oder zumindest vornehmlich nur) von Luminophor 6 innerhalb dieses lokalen Minimums 14 stammen kann.

In **Fig. 5(c)** ist ein zusätzlicher, optionaler Verfahrensschritt skizziert, in dem die Probe 12 vor dem Schritt (d) in dem Messbereich 13 zusätzlich mit STED-Licht 3 beaufschlagt wird, das ebenfalls ein lokales Minimum 16 im Zentrum des Messbereichs 13 aufweist. Wenn dieses lokale Minimum 16 noch kleiner ist als das lokale Minimum 14 kann hierdurch die räumliche Zuordnung des Lumineszenzlichts 2 gemäß Fig. 5(d) noch stärker eingegrenzt werden, wodurch die räumliche Auflösung bei der Abbildung der Struktur 15 noch weiter erhöht wird.

Die in Fig. 5 skizzierten Schritte werden beim Abtasten der Probe mit dem lokalen Minimum 14 bzw. 16 für alle Positionen des lokalen Minimums in der Probe wiederholt. Damit wird die Verteilung des Luminophors 6 in der Probe erfasst und so die mit ihm markierte Struktur 15 abgebildet.

Die in Fig. 5 angedeuteten Intensitätsverteilungen des Lumineszenzverhinderungslichts 10 und des STED-Lichts 3 sind rein beispielhaft. Sie können beliebige andere Formen annehmen, d. h. beliebige Intensitätsverläufe angrenzend an das lokale Minimum 14 bzw. 16 aufweisen, wie diese aus der STED-Fluoreszenzlichtmikroskopie bekannt sind.

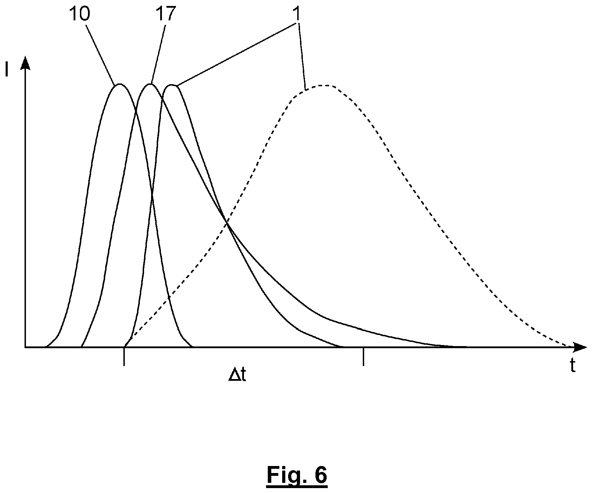

**Fig. 6** illustriert die zeitliche Abfolge eines Pulses des Lumineszenzverhinderungslichts 10, der resultierenden Störung 17 des Grundzustands des Luminophors, eines nachfolgenden Pulses des Anregungslichts 1 und eines Zeitraums Δt, in dem das Lumineszenzlicht von der Probe registriert wird. Dabei ist mit durchgezogener Linie ein kurzer Puls des Anregungslichts 1 dargestellt, der erst nach dem Einsetzen der Störung 17 beginnt und bereits vor dem Abklingen der Störung 17 endet. In diesem Fall kann der Zeitraum Δt auch noch weiter ausgedehnt werden bis das Signal-Rauschen-Verhältnis zurückgeht, ohne dass die Ortsauflösung hierunter leidet. Mit gestrichelter Linie ist hingegen ein längerer Puls des Anregungslichts 1 dargestellt, der zwar auch erst nach dem Einsetzen der Störung 17 beginnt und aber auch erst nach dem Abklingen der Störung 17 endet. Um dennoch das Lumineszenzlicht von der Probe nur aus dem lokalen Minimum der Intensitätsverteilung des Lumineszenzverhinderungslichts 10 zu registrieren, endet der Zeitraum Δt nach vorgegebener Zeit nach dem Puls des Lumineszenzverhinderungslichts 10. Diese Zeit ist so gewählt, dass die Störung 17 des Grundzustands des Luminophors außerhalb des lokalen Minimums 14 gemäß Fig. 5 noch nicht abgeklungen ist. Der Zeitraum Δt endet daher typischerweise wenige ps, oft nur etwa 1 ps, nach dem Puls des Lumineszenzverhinderungslichts 10.

### BEZUGSZEICHENLISTE

- 1: Anregungslicht
- 2: Lumineszenzlicht
- 3: STED-Licht
- 4: stimuliertes Licht
- 5: Modulatoreinheit
- 6: Luminophor
- 7: Bindung
- 8: lumineszentes Zentrum
- 9: Umhüllung
- 10: Lumineszenzverhinderungslicht
- 11: Stoß- oder Vibrationsrelaxation
- 12: Probe
- 13: Messbereich
- 14: lokales Minimum
- 15: Struktur
- 16: lokales Minimum
- 17: Störung
- So: Grundzustand
- S₁: angeregter Zustand
- Δt: Zeitraum

## Patentansprüche

1. Verfahren zum räumlich hochaufgelösten Abbilden einer einen Luminophor (6) aufweisenden Struktur (15) einer Probe (12),
- wobei die Probe (12) in einem Messbereich (13) mit einer eine Nullstelle aufweisenden Intensitätsverteilung von Lumineszenzverhinderungslicht (10) beaufschlagt wird;
- wobei die Probe (12) in dem Messbereich (13) mit Lumineszenzanregungslicht (1) beaufschlagt wird, das den Luminophor (6) aus einem elektronischen Grundzustand (S₀) heraus in einen lumineszierenden Zustand (S₁) anregt;
- wobei aus dem Messbereich (13) emittiertes Lumineszenzlicht (2) registriert wird und
- wobei das registrierte Lumineszenzlicht (2) der Position der Nullstelle in der Probe (12) zugeordnet wird,
**dadurch gekennzeichnet, dass** der elektronische Grundzustand (S₀) des Luminophors (6) durch molekulare Bewegungsimpulse und/oder Schwingungen so gestört wird, dass der Luminophor (6) in dem gestörten elektronischen Grundzustand (S₀) einen um mindestens 50% reduzierten Absorptionsquerschnitt für das Lumineszenzanregungslicht (1) aufweist,
wobei die Bewegungsimpulse und/oder Schwingungen von mindestens einer mit dem Lumineszenzverhinderungslicht (10) angeregten Modulatoreinheit (5) ausgehen, die dem Luminophor (6) räumlich zugeordnet ist.

2. Verfahren nach Anspruch 1, **dadurch gekennzeichnet, dass** das Lumineszenzverhinderungslicht (10) eine Wellenlänge außerhalb eines Lumineszenzanregungsspektrums und/oder des Lumineszenzemissionsspektrums des Luminophors (6) aufweist.

3. Verfahren nach Anspruch 1 oder 2, **dadurch gekennzeichnet, dass** die mindestens eine Modulatoreinheit (5) chemisch an den Luminophor (6) gebunden ist.

4. Verfahren nach einem der vorhergehenden Ansprüche, **dadurch gekennzeichnet, dass** das Lumineszenzverhinderungslicht (10) die Modulatoreinheit (5) zu einer cis-trans-Isomerisierung anregt.

5. Verfahren nach einem der vorhergehenden Ansprüche, **dadurch gekennzeichnet, dass** in dem gestörten elektronischen Grundzustand (S₀) eine atomare Ordnung in dem Luminophor (6) gestört ist.

6. Verfahren nach einem der vorhergehenden Ansprüche, **dadurch gekennzeichnet, dass** sich der Luminophor (6) in dem gestörten elektronischen Grundzustand (S₀) nicht in einem thermischen Gleichgewicht mit seiner Umgebung befindet.

7. Verfahren nach einem der vorhergehenden Ansprüche, **dadurch gekennzeichnet, dass** die Probe (12) in dem Messbereich (13) mit einem Puls des Lumineszenzanregungslichts (19) nur dann beaufschlagt wird, wenn der elektronische Grundzustand (S₀) des Luminophors (6) durch einen Puls des Lumineszenzverhinderungslichts (10) gestört ist.

8. Verfahren nach einem der vorhergehenden Ansprüche, **dadurch gekennzeichnet, dass** ein Zeitraum, in dem das aus dem Messbereich (13) emittierte Lumineszenzlicht (2) registriert wird, beendet wird, während der elektronische Grundzustand (S₀) des Luminophors (6) durch einen vorhergehenden Puls des Lumineszenzverhinderungslichts (10) noch gestört ist.

9. Verfahren nach Anspruch 7 oder 8, **dadurch gekennzeichnet, dass** der Puls des Lumineszenzverhinderungslichts (10) eine Länge im Bereich von 10 fs bis 10.000 fs oder im Bereich von 50 fs bis 500 fs aufweist und/oder dass der Puls des Lumineszenzverhinderungslichts (10) in dem Messbereich eine Energie in einem Bereich von 1 pJ bis 1000 pJ oder in einem Bereich von 5 pJ bis 500 pJ aufweist.

10. Verfahren nach einem der Ansprüche 7 bis 9, **dadurch gekennzeichnet, dass** der Puls des Lumineszenzverhinderungslichts (10) eine Störung des elektronischen Grundzustands (S₀) des Luminophors (6) in dem Messbereich (13) außerhalb der Nullstelle sättigt.

11. Verfahren nach einem der Ansprüche 7 bis 10, **dadurch gekennzeichnet, dass** der Puls des Lumineszenzverhinderungslichts (10) die Anregung eines Zustand (S₁) der mindestens einen Modulatoreinheit (5), von dem die Bewegungsimpulse und/oder Schwingungen ausgehen, sättigt.

12. Verfahren nach einem der vorhergehenden Ansprüche, **dadurch gekennzeichnet, dass** gleiche Modulatoreinheiten (5) an unterschiedliche Luminophore (6), die aus ihren lumineszierenden Zuständen Lumineszenzlicht (2) unterschiedlicher Wellenlängen emittieren, angekoppelt sind und dass das Lumineszenzlicht (2) der unterschiedlichen Wellenlängen getrennt registriert und den einzelnen Luminophoren (6) an der Position der Nullstelle zugeordnet wird.

13. Verfahren nach einem der vorhergehenden Ansprüche, **dadurch gekennzeichnet, dass** die Probe (12) vor dem Registrieren von aus dem Messbereich (13) emittierten Lumineszenzlicht (2) nach einem STED-, GSD- oder RESOLFT-Verfahren mit einer eine Nullstelle aufweisenden Intensitätsverteilung von STED-Licht (3), GSD-Licht oder Ausschaltlicht beaufschlagt wird.

## Claims

1. Method of spatial high resolution imaging of a structure (15) of a sample (12), the structure (15) comprising a luminophore (6),
- wherein the sample (12), in the measurement area (13), is subjected to an intensity distribution of luminescence inhibiting light (10) comprising a zero point;
- wherein the sample (12), in the measurement area (13), is subjected to luminescence excitation light (1) which excites the luminophore (6) out of an electronic ground state (S₀) into a luminescent state (S₁);
- wherein luminescence light (2) emitted out of the measurement area (13) is registered; and
- wherein the registered luminescence light (2) is assigned to the position of the zero point within the sample (12),
**characterized in that** the electronic ground state (S₀) of the luminophore (6) is disturbed by molecular impulses and/or vibrations such that the luminophore (6) in the disturbed electronic ground state (S₀) has an absorption cross-section for the luminescence excitation light (1) which is reduced by at least 50 %,
wherein the impulses and/or vibrations come from at least one modulator entity (5) excited by the luminescence inhibiting light (10), which is spatially allocated to the luminophore (6).

2. Method of claim 1, **characterized in that** the luminescence inhibiting light (10) comprises a wavelength outside the luminescence excitation spectrum and/or the luminescence emission spectrum of the luminophore (6).

3. Method of claim 1 or 2, **characterized in that** the at least one modulator entity (5) is chemically bonded to the luminophore (6).

4. Method of any of the preceding claims, **characterized in that** the luminescence inhibiting light (10) excites the modulator entity (5) for a cis-trans-isomerization.

5. Method of any of the preceding claims, **characterized in that** an atomic order within the luminophore (6) is disturbed in the disturbed electronic ground state (S₀).

6. Method of any of the preceding claims, **characterized in that** the luminophore (6) being in the disturbed electronic ground state (S₀) is not in a thermal equilibrium with its surroundings.

7. Method of any of the preceding claims, **characterized in that** the sample (12), within the measurement area (13), is only subjected to a pulse of the luminescence excitation light (19) when the electronic ground state (S₀) of the luminophore (6) is disturbed by a pulse of the luminescence inhibiting light (10).

8. Method of any of the preceding claims, **characterized in that** a period of time in which the luminescence light (2) emitted out of the measurement area (13) is registered is terminated while the electronic ground state (S₀) of the luminophore (6) is still disturbed by a previous pulse of the luminescence inhibiting light (10).

9. Method of claim 7 or 8, **characterized in that** the pulse of the luminescence inhibiting light (10) has a length in a range from 10 fs to 10,000 fs or in a range from 50 fs to 500 fs, and/or that the pulse of the luminescence inhibiting light (10) has an energy in the measurement area in a range from 1 pJ to 1000 pJ or in a range from 5 pJ to 500 pJ.

10. Method of any of the claims 7 to 9, **characterized in that** the pulse of the luminescence inhibiting light (10), outside the zero point, saturates a disturbance of the electronic ground state (S₀) of the luminophore (6) within the measurement area (13).

11. Method of any of the claims 7 to 10 so far as dependent on any of the claims 4 to 6, **characterized in that** the pulse of the luminescence inhibiting light (10) saturates the excitation of a state (S₁) of the at least one modulator entity (5) from which the impulses and/or vibrations come from.

12. Method of any of the preceding claims, **characterized in that** same modulator entities (5) are coupled to different luminophores (6) which, out of their luminescent states, emit luminescence light (2) of different wavelengths, and that the luminescence light (2) of the different wavelengths is registered separately and assigned to the individual luminophores (6) at the position of the zero point.

13. Method of any of the preceding claims, **characterized in that** the sample (12), prior to registering luminescence light (2) emitted out of the measurement area (13) according to an STED, GSD, or RESOLFT method, is subjected to an intensity distribution of STED light (3), GSD light or switching off light having a zero point.

## Revendications

1. Procédé de représentation spatiale à haute résolution d'une structure (15) d'un échantillon (12) comprenant un luminophore (6),
- l'échantillon (12) étant alimenté dans une plage de mesure (13) avec une répartition d'intensité comprenant un point zéro d'une lumière empêchant la luminescence (10) ;
- l'échantillon (12) étant alimenté dans la plage de mesure (13) avec une lumière excitant la luminescence (1), qui excite le luminophore (6) à partir d'un état de base électronique (S₀) vers un état luminescent (S₁) ;
- la lumière de luminescence (2) émise à partir de la plage de mesure (13) étant enregistrée et
- la lumière de luminescence (2) enregistrée étant attribuée à la position du point zéro dans l'échantillon (12),
**caractérisé en ce que** l'état de base électronique (S₀) du luminophore (6) est perturbé par des impulsions de mouvements moléculaires et/ou des vibrations de façon à ce que le luminophore (6) présente, dans l'état de base électronique (S₀), une section d'absorption réduite d'au moins 50 % pour la lumière de luminescence (1),
les impulsions de mouvement et/ou les vibrations provenant d'au moins une unité de modulateur (5), excitée par la lumière empêchant la luminescence (10), qui correspond spatialement au luminophore (6).

2. Procédé selon la revendication 1, **caractérisé en ce que** la lumière empêchant la luminescence (10) présente une longueur d'onde à l'extérieur d'un spectre d'excitation de luminescence et/ou du spectre d'émission de luminescence du luminophore (6).

3. Procédé selon la revendication 1 ou 2, **caractérisé en ce que** l'au moins une unité de modulateur (5) est liée chimiquement au luminophore (6).

4. Procédé selon l'une des revendications précédentes, **caractérisé en ce que** la lumière empêchant la luminescence (10) excite l'unité de modulateur (5) en une isomérisation cis-trans.

5. Procédé selon l'une des revendications précédentes, **caractérisé en ce que**, dans l'état de base électronique (S₀) perturbé, un ordre atomique dans le luminophore (6) est perturbé.

6. Procédé selon l'une des revendications précédentes, **caractérisé en ce que** le luminophore (6) ne se trouve pas, dans l'état de base électronique (S₀) perturbé, dans un équilibre thermique avec son environnement.

7. Procédé selon l'une des revendications précédentes, **caractérisé en ce que** l'échantillon (12) n'est alimenté, dans la plage de mesure (13), avec une impulsion de lumière d'excitation de luminescence (19) que lorsque l'état de base électronique (S₀) du luminophore (6) est perturbé par une impulsion de la lumière empêchant la luminescence (10).

8. Procédé selon l'une des revendications précédentes, **caractérisé en ce qu'**une période, dans laquelle la lumière de luminescence (2) émise à partir de la plage de mesure (13) est enregistrée, est terminée tandis que l'état de base électronique (S₀) du luminophore (6) est encore perturbé par une impulsion précédente de la lumière empêchant la luminescence (10).

9. Procédé selon la revendication 7 ou 8, **caractérisé en ce que** l'impulsion de la lumière empêchant la luminescence (10) présente une longueur de l'ordre de 10 fs à 10 000 fs ou de l'ordre de 50 fs à 500 fs et/ou **en ce que** l'impulsion de la lumière empêchant la luminescence (10) présente, dans la plage de mesure, une énergie de 1 pJ à 1 000 pJ ou de l'ordre de 5 pJ à 500 pJ.

10. Procédé selon l'une des revendications 7 à 9, **caractérisé en ce que** l'impulsion de la lumière empêchant la luminescence (10) sature une perturbation de l'état de base électronique (S₀) du luminophore (6) dans la plage de mesure (13) à l'extérieur du point zéro.

11. Procédé selon l'une des revendications 7 à 10, **caractérisé en ce que** l'impulsion de la lumière empêchant la luminescence (10) sature l'excitation d'un état (S₁) de l'au moins une unité de modulateur (5), d'où proviennent les impulsions de mouvement et/ou les vibrations.

12. Procédé selon l'une des revendications précédentes, **caractérisé en ce que** des unités de modulateurs identiques (5) sont couplés à différents luminophores (6) qui émettent, à partir de leurs états luminescents, une lumière de luminescence (2) de différentes longueurs d'onde, et **en ce que** la lumière de luminescence (2) de différentes longueurs d'onde est enregistrée séparément et est attribuée aux différents luminophores (6) au niveau du point zéro.

13. Procédé selon l'une des revendications précédentes, **caractérisé en ce que** l'échantillon (12) est alimenté, avant l'enregistrement d'une lumière de luminescence (2) émise à partir de la plage de mesure (13), selon un procédé STED, GSD ou RESOLTFT, avec une répartition d'intensité, comprenant un point zéro, d'une lumière STED (3), d'une lumière GSD ou d'une lumière d'extinction.
